# EUROPÄISCHE PATENTSCHRIFT

(11) **EP 1 348 625 B1**
(45) Veröffentlichungstag und Bekanntmachung des Hinweises auf die Patenterteilung: **11.01.2006**
(21) Anmeldenummer: 03005871.3
(22) Anmeldetag: 15.03.2003
(51) Int. Cl.: B64D 11/06, B60N 2/30

(54) **Fahrzeugsitz, insbesondere Fluggastsitz**
Vehicle seat, in particular an airline passenger seat
Siège pour vehicule, en particulier siège pour passager d'avion

(30) Priorität: 28.03.2002 DE 10214104
(43) Veröffentlichungstag der Anmeldung: 01.10.2003
(73) Patentinhaber: Airbus Deutschland GmbH, 21129 Hamburg (DE)
(72) Erfinder: Muin, Andrew, 21698 Harsefeld (DE); Schumacher, Markus, 21614 Buxtehude (DE); Schoenenberg, Frank-Heinrich, 74523 Schwäbisch Hall (DE); Majunke, Christian, 18057 Rostock (DE)
(74) Vertreter: Hansmann, Dierk

(56) Entgegenhaltungen:
- EP-A- 0 882 648
- DE-A- 10 052 591
- DE-A- 19 534 024
- GB-A- 2 337 925
- US-A- 4 189 876
- US-A- 4 498 649
- US-A- 5 485 976

## Beschreibung

Die Erfindung betrifft einen Fahrzeugsitz, insbesondere Fluggastsitz, der mit einem Sitzteil und einer Rückenlehne, die an einem Sitzgestell angeordnet sind, wobei das das Sitzteil ist um eine horizontale Achse von einer ersten, annähernd vertikalen Stellung in eine zweite, annähernd horizontale Stellung klappbar ist.

Ein derartiger Fahrzeugsitz wird in der DE 195 34 024 C2 beschrieben. Der bekannte Fahrzeugsitz ist als Sitzgruppe ausgebildet, die in der Passagierkabine eines Flugzeugs Anwendung findet. Die Sitzgruppe weist ein Traggestell auf, dass mehrere, jeweils aus einem Sitzteil und einer Rückenlehne bestehende Sitze trägt. Die Sitze sind durch eine gemeinsame Führungsschiene querverschieblich angeordnet. Eine an einem Sitzteil angeordnete Koppeleinrichtung ist mittels einer Relativbewegung eines sitzspezifischen Bauteils betätigbar und steht mit einem an dem Sitzteil angeordneten Führungselement in Wirkverbindung. Bei Betätigung der Koppeleinrichtung bewegt sich das Führungselement mit dem zugeordneten Sitz auf der Führungsschiene. Die danach über eine verschiebbare Anordnung der Sitze verfügende Sitzgruppe ermöglicht eine variable Anpassung der in einem Flugzeug zur Verfügung stehenden Verkehrsfläche. Nachteilig bei der bekannten Sitzgruppe ist eine verhältnismäßig hohe Anzahl an Bauteilen und eine sich daraus ergebende aufwendige Montage.

Ein Fahrzeugsitz wird weiterhin in der DE 36 38 231 A1 beschrieben. Sowohl die Rückenlehne als auch das Sitzteil dieses in erster Linie als Fluggastsitz dienenden Fahrzeugsitzes sind verstellbar angeordnet. Die Rückenlehne und das Sitzteil sind durch einen doppelarmigen Hebel derart miteinander gekoppelt, daß das Sitzteil bei einem Verstellen der Rückenlehne nach hinten in einem der Rückenlehne zugewandten hinteren Abschnitt abgesenkt und in einem vorderen Abschnitt nahezu unverändert bleibt. Auf diese Weise ergibt sich ein relativ hoher Komfort für eine den Fahrzeugsitz benutzende Person. Als Nachteil bei dem bekannten Fahrzeugsitz hat sich eine in konstruktiver Hinsicht verhältnismäßig aufwendige und schwergewichtige Ausgestaltung erwiesen. Nachteilig ist zudem, daß, wenn mehrere Fahrzeugsitze nebeneinander und hintereinander angeordnet werden, wie dies bei der Verwendung als Fluggastsitz gewöhnlich der Fall ist, eine Reinigung aufgrund des in der Regel knapp bemessenen Freiraums zwischen den Fahrzeugsitzen erschwert ist.

Aus GB-A-2 337 925 ist ein Klappmechanismus zum Verstellen von einer Rückenlehne sowie eines Sitzteiles eines Fahrzeugsitzes bestimmt. Mit diesem Mechanismus ist es möglich, die Verstellwinkel/Positionen vom Sitzteil sowie der Rückenlehne einzustellen. Der Mechanismus nutzt einen Tragbolzen, der eine gemeinsame Drehachse für weitere Teile, d.h. Tragscheiben des Sitzteiles sowie der Rückenlehne bildet. Eine aufwändige Kopplung der Tragscheiben ist vorgesehen in der Weise, daß mittels eines Stiftes, geführt in einem Führungsteil, sowie mehreren Führungsflächen und Kulissen an den Schreiben die verschiedenen Stellungen des Sitzteiles sowie der Rückenlehne zueinander sowie zum Sitzgestell eingestellt werden können. Der Klappmechanismus ist aufgrund der Kopplung der Bewegungsmöglichkeiten zwischen dem Sitzteil, der Rückenlehne sowie dem Sitzgestell als ein relativ komplexer Mechanismus ausgebildet.

Der Erfindung liegt die **Aufgabe** zugrunde, einen Fahrzeugsitz der eingangsgenannten Art dahingehend weiterzubilden, daß sich bei einer guten Zugänglichkeit eine vergleichsweise geringe Anzahl an Bauteilen erzielen lässt, die sowohl eine einfach Montage als auch eine kompakte Bauweise gewährleistet.

Zur Lösung dieser Aufgabe erfolgt erfindungsgemäß durch die Merkmalskombination des Patentanspruches 1.

Der auf diese Weise als Klappsitz ausgebildete Fahrzeugsitz gewährleistet aufgrund des klappbaren Sitzteils eine gute Zugänglichkeit, und zwar auch dann, wenn mehrere Fahrzeugsitze in einem verhältnismäßig engen Abstand hintereinander angeordnet sind. Infolge der guten Zugänglichkeit ist sowohl eine einfache Reinigung als auch ein bequemes Hinsetzen sichergestellt. Der erfindungsgemä-βe Fahrzeugsitz eignet sich somit in besonderem Maße als Fluggastsitz. Darüber hinaus zeichnet sich der erfindungsgemäße Fahrzeugsitz durch eine vergleichsweise geringe Anzahl an Bauteilen aus, die zu einer einfachen Montage und einer kompakten Bauweise beitragen. Grund hierfür ist die Ausgestaltung des Tragbolzens, die ermöglicht, das Sitzteil und die Rückenlehne gelenkig mit den Sitzteilern des Sitzgestells zu verbinden. Der Tragbolzen bewirkt somit eine funktionelle Integration, die eine vergleichsweise geringe Anzahl an Bauteilen sicherstellt. Die Tragarme können entweder als separate Bauteile mit dem Sitzteil verbunden werden oder einstückig mit dem Sitzteil gefertigt sein. Insbesondere letzteres trägt zu einer hohen Funktionsintegration und damit zu einer einfachen Montage bei. Indem der Tragbolzen zusätzlich die Lagerung des Sitzteils übernimmt, wird einer hohen Funktionsintegration Rechnung getragen. Ähnlich wie bei der Lagerung der Rückenlehne ergibt sich bei einer drehfesten Verbindung von Mittelabschnitt und Öffnung der Tragarme ein Verschwenken des Sitzteils durch Drehen des Tragbolzens.

Vorteilhafte Weiterbildungen des erfindungsgemäßen Fahrzeugsitzes stellen die Gegenstände der abhängigen Ansprüche 2 bis 16 dar.

In einer bevorzugten Ausgestaltung des erfindungsgemäßen Fahrzeugsitzes ist die Rückenlehne gegen die Wirkung einer Feder, vorzugsweise einer Gasfeder, verstellbar an dem Sitzgestell angeordnet. Die in ihrer Neigung verstellbare Rückenlehne kann auf diese Weise bequem und schnell von einer zurückgelehnten Stellung in die Ausgangsstellung gebracht werden.

In einer vorteilhaften Ausgestaltung des erfindungsgemäßen Fahrzeugsitzes ist die Feder auf einer Konsole, die an dem Tragbalken befestigt ist, angeordnet und mit einem Verstellhebel, der drehfest mit dem ersten Endabschnitt des Tragbolzens gekoppelt ist, verbunden. Die Anordnung der Feder auf der Konsole trägt zu einer einfachen Ausgestaltung und damit kostengünstigen Fertigung des Tragbalkens bei. Der Verstellhebel ermöglicht eine Drehung des Tragbolzens. Aufgrund der Verbindung des Verstellhebels mit der Feder läßt sich der Tragbolzen und damit die Rückenlehne gegen die Wirkung der Feder verstellen.

Weiterhin ist es in Hinsicht auf einen hohen Komfort einer den erfindungsgemäßen Fahrzeugsitz benutzenden Person von Vorteil, eine Armlehne vorzusehen, die an den Sitzteilern schwenkbar angeordnet ist. Die schwenkbare Anordnung der Armlehne gewährleistet, daß bei hochgeklapptem, das heißt in der vertikalen Stellung befindlichem Sitzteil, der auf diese Weise zwischen zwei hintereinander angeordneten Fahrzeugsitzen entstehende Freiraum nicht durch die Armlehne beeinträchtigt wird.

Eine einfache Montage der Armlehne läßt sich vorteilhafterweise dann erreichen, wenn die Armlehne aus einer Unterschale und einer Oberschale, die das obere Ende der Sitzteiler umgreifen, zusammengesetzt ist. Grund hierfür ist, daß die Armlehne auf diese Weise zweigeteilt ist und sich damit vergleichsweise einfach an den Sitzteilern anbringen läßt.

Gemäß des erfindungsgemäßen Fahrzeugsitzes ist das Sitzteil gegen die Wirkung einer Feder, vorzugsweise einer Gasfeder, von der ersten Stellung in die zweite Stellung schwenkbar. Eine solche Ausgestaltung stellt sicher, daß sich das Sitzteil bei unbesetztem Fahrzeugsitz stets in der hochgeklappten Stellung befindet. In konstruktiver Hinsicht hat es sich dabei als vorteilhaft erwiesen, die Feder auf dem Sitzteiler anzuordnen und mit einem Schwenkhebel, der drehfest mit dem ersten Endabschnitt des Tragbolzens gekoppelt ist, zu verbinden. Auf diese Weise wird die durch die Feder erzeugte Federkraft in ein den Tragbolzen belastendes Moment gewandelt, welches das Sitzteil in die erste Stellung schwenkt.

Als vorteilhaft hat sich zudem herausgestellt, eine Koppelstange, die mittels eines Führungsbolzens in einer an der Armlehne angeordneten Kulisse geführt ist, an dem Schwenkhebel anzulenken. Die Koppelstange bewirkt eine Kopplung von Sitzteil und Armlehne und gewährleistet somit, daß auch die Armlehne hochgeklappt ist, wenn sich das Sitzteil in der ersten Stellung befindet. Durch das Vorsehen der Kulisse ist sichergestellt, daß die Armlehne auch bei in der zweiten, horizontalen Stellung befindlichem Sitzteil hochgeklappt werden kann.

Eine beanspruchungsgerechte Ausgestaltung des Tragbalkens ergibt sich dann, wenn der Tragbalken vorteilhafterweise im Querschnitt rund, vorzugsweise oval, ausgebildet ist. Vor allem ein ovaler Querschnitt des zweckmäßigerweise als Hohlprofil ausgestalteten Tragbalkens, bei dem die größere Halbachse horizontal verläuft, ergibt ein in Hinsicht auf die bei dem Fahrzeugsitz auftretenden Belastungen günstiges Widerstandsmoment.

Um den Tragbalken möglichst leichtgewichtig zu konzipieren, ist es von Vorteil, den Tragbalken aus einem kohlefaserverstärkten Kunststoff (CfK) zu fertigen. Ein kohlefaserverstärkter Kunststoff verfügt bei einer relativ geringen Dichte über eine hohe Festigkeit. Die Gestellfüße und/oder die Sitzteile und/oder die Konsolen dagegen sind bevorzugt aus Aluminium gefertigt, insbesondere gefräst, und vorzugsweise durch eine Klemmverbindung an dem Tragbalken befestigt. Die Verwendung von Aluminium stellt bei einem vergleichsweise geringen Gewicht eine hohe Festigkeit des Sitzgestells sicher. Aufgrund der Klemmverbindung ist eine zuverlässige Befestigung der Gestellfüße, der Sitzteiler und der Konsolen an dem Tragbalken auch bei unterschiedlichen Materialien gewährleistet.

In einer bevorzugten Weiterbildung des erfindungsgemäßen Fahrzeugsitzes weist das Sitzteil einen Sitzkasten auf, der vorzugsweise aus einem kohlefaserverstärkten Kunststoff gefertigt und mit einem Polster aus einem elastischen Werkstoff versehen ist. Der Sitzkasten verleiht dem Sitzteil eine hohe Festigkeit, wohingegen das Polster zu einem hohen Komfort einer den Fahrzeugsitz benutzenden Person beiträgt. In an sich bekannter Weise kann das Polster mit einem Bezug bespannt sein.

Um besonders bei der Verwendung des erfindungsgemäßen Fahrzeugsitzes als Fluggastsitz einem Passagier im Falle eines Crashes einen guten Rückhalt zu gewährleisten, weist der Sitzkasten vorteilhafterweise eine obere Fläche auf, die mit einer rampenförmigen Vertiefung versehen ist. Die Vertiefung stellt eine sogenannte Anti-Submarining-Rampe dar, die ein übermäßiges Nach-vorne-Rutschen eines Passagiers im Falle eines Crashes verhindert.

Von Vorteil ist außerdem, den Sitzkasten mit einem Staufach zu versehen. Wird der Fahrzeugsitz als Fluggastsitz verwendet, kann das Staufach beispielsweise zur Unterbringung einer Rettungsweste dienen.

In einer bevorzugten konstruktiven Ausgestaltung des erfindungsgemäßen Fahrzeugsitzes weist der Sitzkasten eine Aussparung auf, die an die Kontur des Tragbalkens angepaßt ist und in welcher der Sitzkasten in der zweiten Stellung des Sitzteils auf dem Tragbalken aufliegt. Ist der Tragbalken im Querschnitt oval ausgestaltet, hat die Aussparung danach eine im wesentlichen muldenförmige Kontur. Der auf dem Tragbalken in der zweiten Stellung aufliegende Sitzkasten wird zum einen wirksam abgestützt. Zum anderen dient der Tragbalken somit als Anschlag für den mittels der Tragarme schwenkbar aufgehängten Sitzkasten, wodurch das Sitzteil in der zweiten Stellung lagegenau positioniert wird und die Tragbolzen entlastet werden.

In Weiterbildung des erfindungsgemäßen Fahrzeugsitzes wird überdies vorgeschlagen, daß der Sitzkasten eine Aussparung für die Konsolen aufweist. Auf diese Weise beeinträchtigen die an dem Tragbalken befestigten Konsolen nicht den Schwenkbereich des Sitzteiles.

Schließlich wird vorgeschlagen, daß der erfindungsgemäße Fahrzeugsitz vorteilhafterweise jeweils mehrere, vorzugsweise drei, Sitzteile und Rückenlehnen aufweist, die nebeneinander auf dem Tragbalken angeordnet sind. Der Fahrzeugsitz stellt auf diese Weise eine Sitzbank dar, wie sie in der Regel in Flugzeugen Anwendung findet.

Einzelheiten und weitere Vorteile des Fahrzeugsitzes gemäß der vorliegenden Erfindung ergeben sich aus der nachfolgenden Beschreibung eines bevorzugten Ausführungsbeispieles. In den das Ausführungsbeispiel schematisch darstellenden Zeichnungen veranschaulichen im einzelnen:
- Fig. 1a: eine perspektivische Ansicht eines erfindungsgemäßen Fluggastsitzes, der als drei Sitze aufweisende Sitzbank ausgebildet ist;
- Fig. 1b: eine perspektivische Ansicht des Sitzgestells des Fluggastsitzes gemäß Fig. 1a;
- Fig. 2a: eine rückwärtige Ansicht des Sitzgestells gemäß Fig. 1b mit montierten Rückenlehnen;
- Fig. 2b: eine vergrößerte Darstellung des in Fig. 2a mit IIb gekennzeichneten Bereichs;
- Fig. 2c: eine Explosionsdarstellung der Befestigung der Rückenlehne an dem Sitzgestell;
- Fig. 2d: eine perspektivische Ansicht eines die Rückenlehne verstellenden Mechanismus;
- Fig. 3a: eine perspektivische Ansicht des Sitzgestells gemäß Fig. 1b mit montierten Sitzteilen;
- Fig. 3b: eine Einzeldarstellung eines Sitzteiles;
- Fig. 3c: eine Darstellung gemäß Fig. 3b bei mit einem Polster versehenem Sitzteil;
- Fig. 3d: eine Explosionsdarstellung der Befestigung eines Sitzteils;
- Fig. 4a: eine vergrößerte Darstellung des in Fig. 1a mit IVa gekennzeichneten Bereichs;
- Fig. 4b: eine Explosionsdarstellung der Befestigung eines Schwenkhebels;
- Fig. 4c: eine den Verstellmechanismus einer Armlehne zeigende Seitenansicht;
- Fig. 5a: eine Ansicht gemäß Fig. 1a bei einem hochgeklappten Sitzteil;
- Fig. 5b: eine Darstellung der unterschiedlichen Stellungen von Sitzteil und Armlehne und
- Fig. 5c: eine Seitenansicht von mehreren hintereinander angeordneten Fluggastsitzen, die den Freiraum zwischen den Fluggastsitzen bei einerseits heruntergeklappten und andererseits hochgeklappten Sitzteil und Armlehne veranschaulichen.

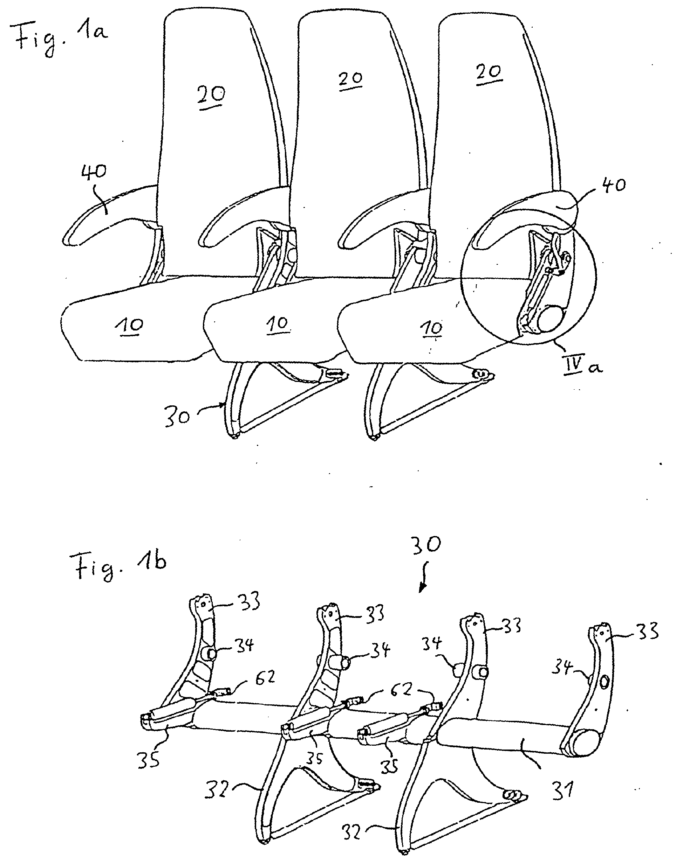

Der in Fig. 1a dargestellte Fluggastsitz ist als mehreren Passagieren Platz bietende Sitzbank ausgebildet. Die Sitzbank weist ein Sitzgestell 30 auf, an dem nebeneinander jeweils drei Sitzteile 10 und Rückenlehnen 20 angeordnet sind. Wie insbesondere Fig. 1b erkennen läßt, weist das Sitzgestell 30 einen freitragenden Tragbalken 31 auf, der auf Gestellfüßen 32 abgestützt ist. Weiterhin ist das Sitzgestell 30 mit Sitzteilern 33 versehen, welche die Rückenlehnen 20 seitlich einfassen. Der im Querschnitt im wesentlichen oval ausgebildete Tragbalken 31 ist aus einem kohlefaserverstärkten Kunststoff gefertigt, wohingegen sowohl die Gestellfüße 32 als auch die Sitzteiler 33 aus Aluminium gefräst sind. Aufgrund der unterschiedlichen Materialien sind die Gestellfüße 32 und die Sitzteiler 33 vorzugsweise durch eine Klemmverbindung an dem Tragbalken 31 befestigt. Die Sitzteiler 33 können zu diesem Zweck mit den Gestellfüßen 32 verbunden sein, wie aus Fig. 1b ersichtlich ist.

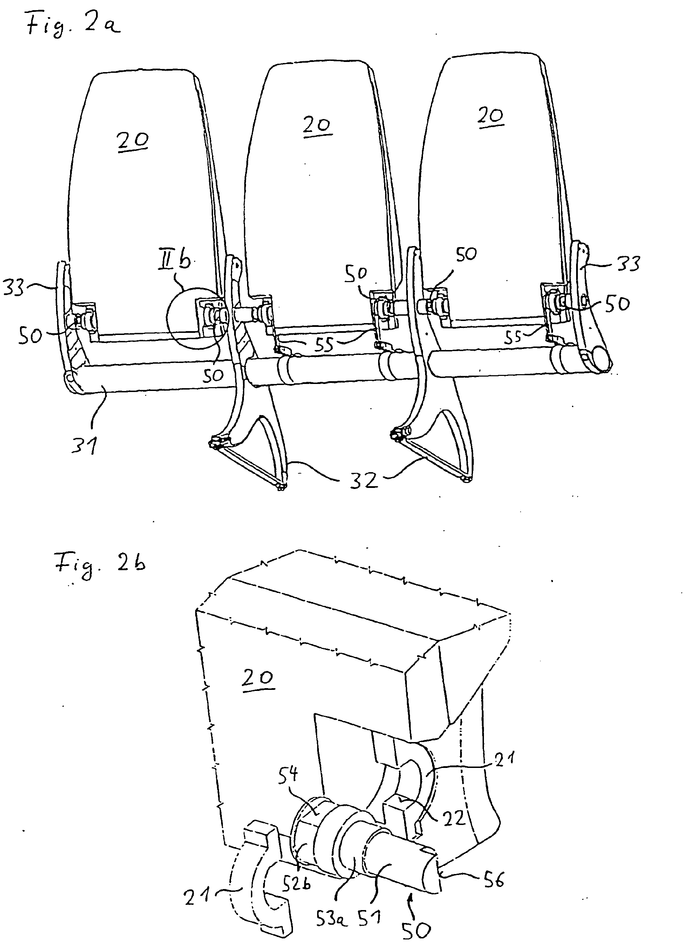

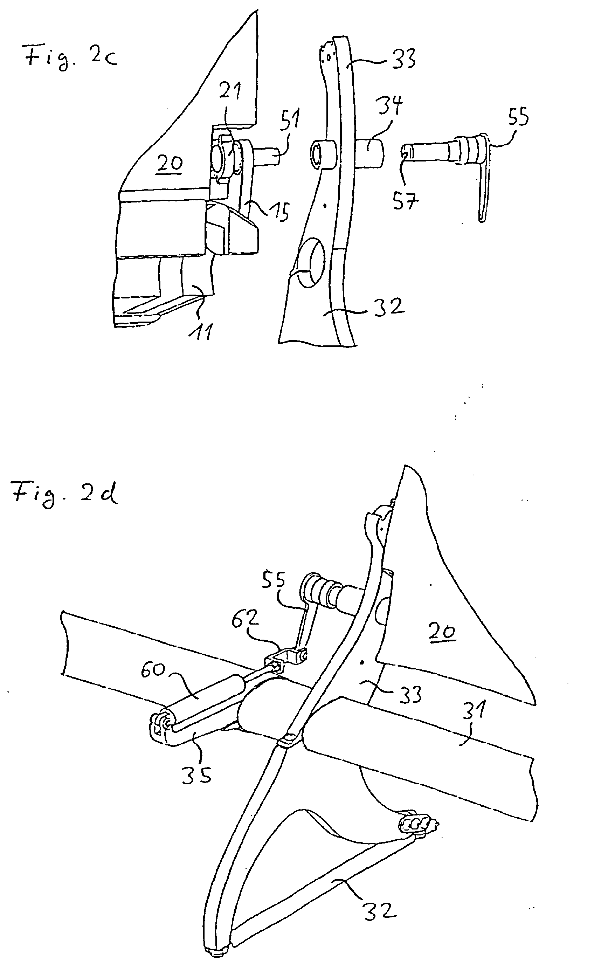

In den Fig. 2a bis 2d ist die Befestigung der Rückenlehne 20 an dem Sitzgestell 30 gezeigt. Wie aus Fig. 2a ersichtlich, ist die Rückenlehne 20 in ihrer Neigung verstellbar an dem Sitzgestell 30 angeordnet. Zu diesem Zweck finden Tragbolzen 50 Anwendung, die ein Schwenken der Rückenlehne 20 gestatten. Die Tragbolzen 50 sind an einem ersten Endabschnitt 51 in einer an den Sitzteilern 33 angeordneten Lagerbuchse 34 drehbar gelagert, wie die Fig. 2b und 2c erkennen lassen. Ein dem ersten Endabschnitt 51 gegenüberliegender zweiter Endabschnitt 52b ist drehfest mit einer an der Rückenlehne 20 angeordneten Lagerschelle 21 verbunden. Zu diesem Zweck weist die Lagerschelle 21 Abflachungen 22 auf, die formschlüssig mit Abflachungen 54 des zweiten Endabschnitts 52b verbunden sind. Weiterhin ist der erste Endabschnitt 51 drehfest mit einem Verstellhebel 55 gekoppelt, dessen Auslenkung demzufolge ein Verschwenken der Rückenlehnen 20 hervorruft. Für die drehfeste Koppelung von erstem Endabschnitt 51 und Verstellhebel 55 sind Abflachungen 56, 57 vorgesehen, die im Inneren der Lagerbuchse 34 einen Formschluß zwischen erstem Endabschnitt 51 und Verstellhebel 55 bewirken.

Wie aus Fig. 2d ersichtlich, ist der Verstellhebel 55 mittels eines Verbindungsstücks 62 mit einer Gasfeder 60 verbunden. Die Gasfeder 60 ist auf einer aus Aluminium gefrästen Konsole 35 angeordnet, die durch eine Klemmverbindung an dem Tragbalken 31 befestigt ist. Auf diese Weise läßt sich die Rückenlehne 20 gegen die Wirkung der Gasfeder 60 in ihrer Neigung verstellen. Für die Verstellung der Rückenlehne 20 kann in an sich bekannter Weise ein nicht dargestellter Antrieb, der beispielsweise an dem Verbindungsstück 62 angreift, vorgesehen sein.

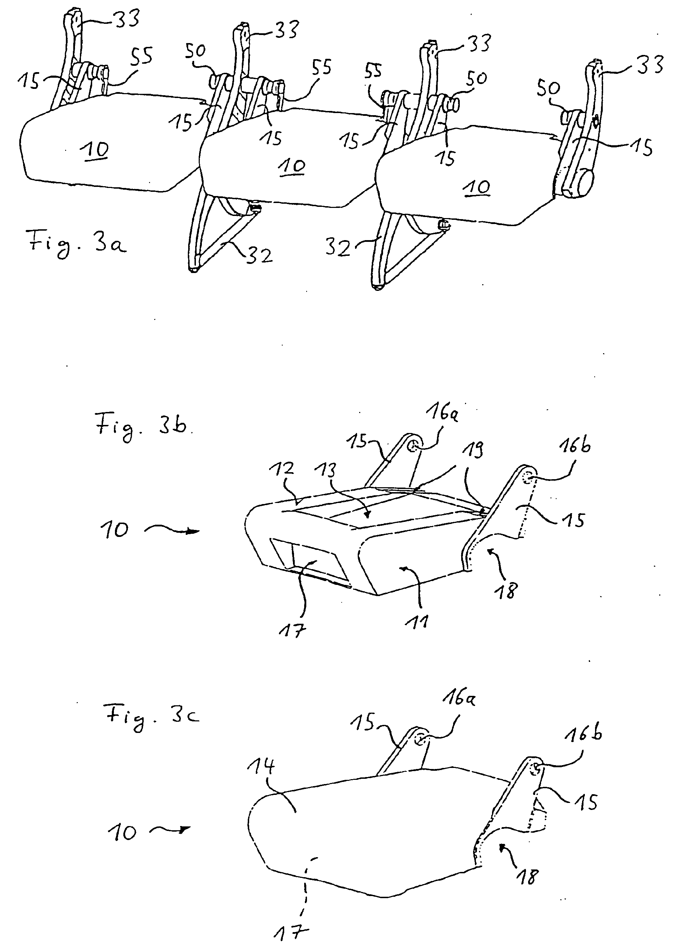

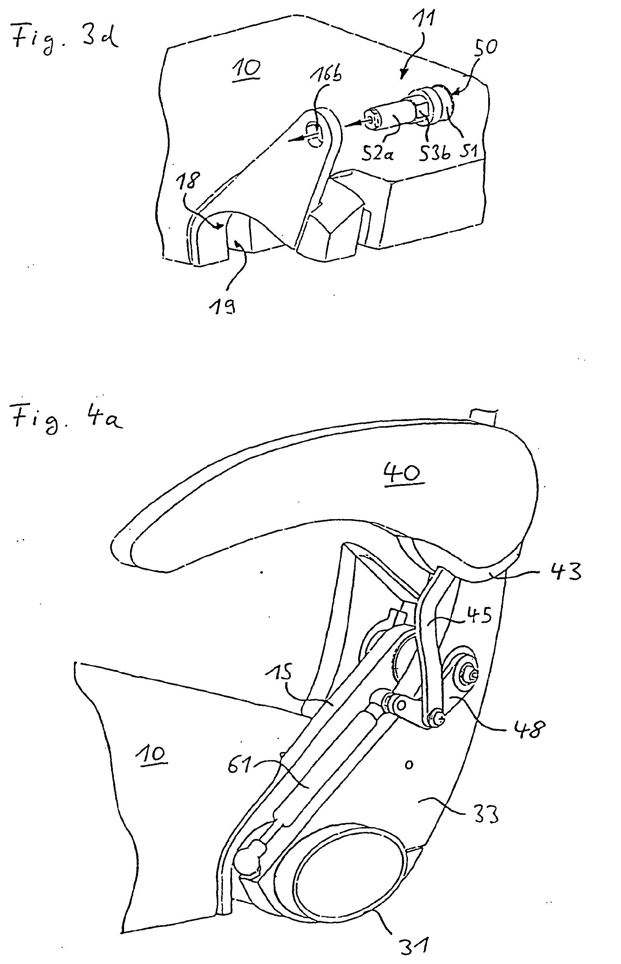

In den Fig. 3a bis 3d ist die Befestigung des Sitzteils 10 an dem Sitzgestell 30 dargestellt. Wie besonders Fig. 3b erkennen läßt, weist das Sitzteil 10 einen Sitzkasten 11 auf, der aus einem kohlefaserverstärkten Kunststoff gefertigt ist. Der Sitzkasten 11 ist an einer oberen Fläche 12 mit einer rampenförmigen Vertiefung 13 versehen, die als sogenannte Anti-Submarining-Rampe einem übermäßigen Nach-vorne-Rutschen eines den Fluggastsitz benutzenden Passagiers entgegenwirkt. Der Sitzkasten 11 ist ferner mit einem Staufach 17 versehen, in dem sich beispielsweise eine Rettungsweste verstauen läßt. Der Sitzkasten 11 trägt auf seiner oberen Fläche 12 ein Polster 14, das in herkömmlicher Weise mit einem Bezug bespannt ist. Der Bezug verdeckt das Staufach 17, wie in Fig. 3c zu erkennen ist. Um eine in dem Staufach 17 verstaute Rettungsweste ohne weiteres herausnehmen zu können, ist der Bezug mit einer nicht dargestellten Reißleine versehen, durch die im Bedarfsfall der Bezug vor dem Staufach 17 ohne weiteres entfernt werden kann.

An den Sitzkasten 11 sind seitlich Tragarme 15 angeformt, die schwenkbar an den Sitzteilern 33 angelenkt sind. Zu diesem Zweck sind die Tragarme 15 mit Öffnungen 16a, 16b versehen, in denen ein Mittelabschnitt 53a, 53b der Tragbolzen 50 drehbar gelagert ist. Das Sitzteil 10 ist auf diese Weise um die sich in horizontaler Richtung erstreckenden Tragbolzen 50 von einer ersten, annähernd vertikalen Stellung I in eine zweite, annähernd horizontale Stellung II klappbar.

Der in Fig. 3a rechte Tragarm 15 weist im Unterschied zu den übrigen Tragarmen 15 eine Öffnung 16b auf, die mit Abflachungen versehen ist. Wie aus Fig. 3d ersichtlich, weist dementsprechend der Mittelabschnitt 53b des sich durch die Öffnung 16b hindurch erstreckenden Tragbolzens 50 gleichfalls Abflachungen auf, die einen Formschluß zwischen dem Tragbolzen 50 und dem Tragarm 15 hervorrufen. Durch eine Drehung des Tragbolzens 50 wird somit das in Fig. 3a rechte Sitzteil 10 von der ersten Stellung I in die zweite Stellung II geklappt, wohingegen die beiden anderen Sitzteile 10 durch Angreifen an dem Sitzkasten 11 zu klappen sind.

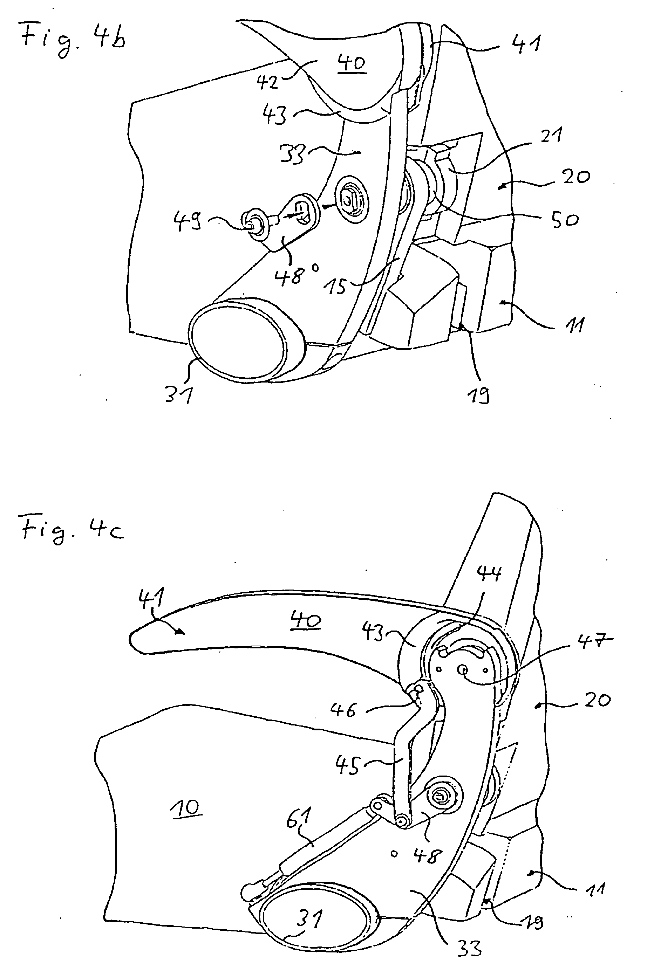

In den Fig. 4a bis 4c ist die Anordnung einer schwenkbaren Armlehne 40 an den Sitzteilern 33 dargestellt. Die Armlehne 40 setzt sich aus einer Unterschale 41 und einer Oberschale 42 zusammen, die das obere Ende der Sitzteiler 33 umgreifen, wie aus Fig. 4b ersichtlich ist. Die Armlehne 40 ist dabei mittels eines Gelenkbolzens 47 drehbar an den Sitzteilern 33 gelagert. Um die Gefahr von Quetschungen zu vermeiden, ist im Bereich des oberen Endes der Sitzteiler 33 eine Abdeckung 43 vorgesehen, die einen zum Schwenken der Armlehne 40 unvermeidlichen Spalt zwischen der Unterschale 41 und der Oberschale 42 verdeckt.

Im Inneren der Armlehne 40 ist eine Kulisse 44 angeordnet, die einen verschiebbaren Drehpunkt für eine mittels eines Führungsbolzens 46 in der Kulisse 44 geführte Koppelstange 45 bildet. Die Koppelstange 45 ist an einem Schwenkhebel 48 angelenkt, der drehfest mit dem ersten Endabschnitt 51 des Tragbolzens 50 des in den Fig. 1a und 3a rechten Sitzes gekoppelt ist. Für die drehfeste Kopplung ist der erste Endabschnitt 51 formschlüssig mit dem Schwenkhebel 48 verbunden, wie vor allem in Fig. 4b zu erkennen ist. Die axiale Sicherung von Schwenkhebel 48 und erstem Endabschnitt 51 übernimmt eine Schraube 49, die von außen in eine Bohrung des ersten Endabschnittes 51 geschraubt ist.

Der Schwenkhebel 48 ist an seinem dem ersten Endabschnitt 51 gegenüberliegenden Ende mit einer Gasfeder 61 verbunden, die auf dem Sitzteiler 33 angeordnet ist. Die Gasfeder 61 bewirkt, daß der Tragbolzen 50 und damit das mit diesem formschlüssig verbundene Sitzteil 10 gegen die durch die Gasfeder 61 hervorgerufene Rückstellkraft von der vertikalen Stellung I in die horizontale Stellung II klappbar ist. Auf diese Weise befindet sich das Sitzteil 10 stets in der vertikalen Stellung I, wenn der Sitz unbesetzt ist.

Aufgrund der Koppelstange 45 folgt die Armlehne 40 der Bewegung des Sitzteils 10. Ein Schwenken der Armlehne 40 unabhängig von dem Sitzteil 10 ist durch die Kulisse 44 gewährleistet. Das bedeutet, daß die Armlehne 40 bei heruntergeklapptem Sitzteil 10 in eine vertikale Stellung verschwenkt werden kann, um beispielsweise einer den Sitz benutzenden Person ein einfaches Aufstehen zu gestatten.

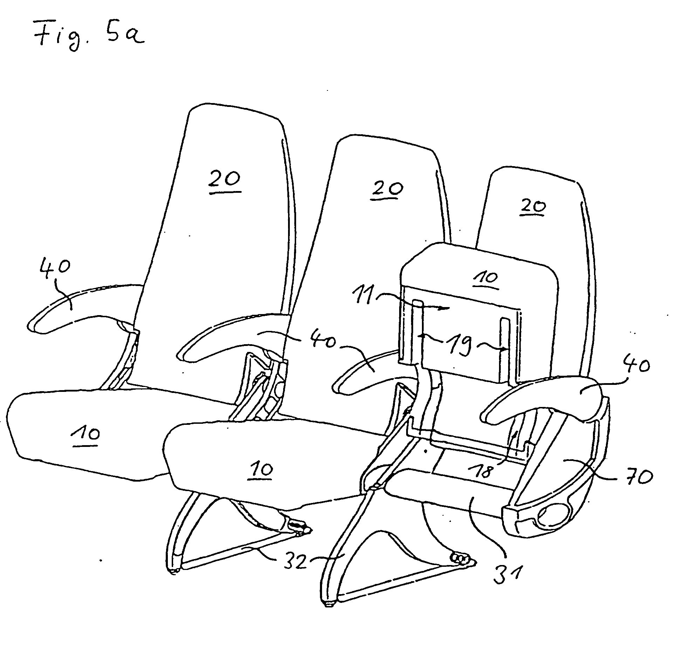

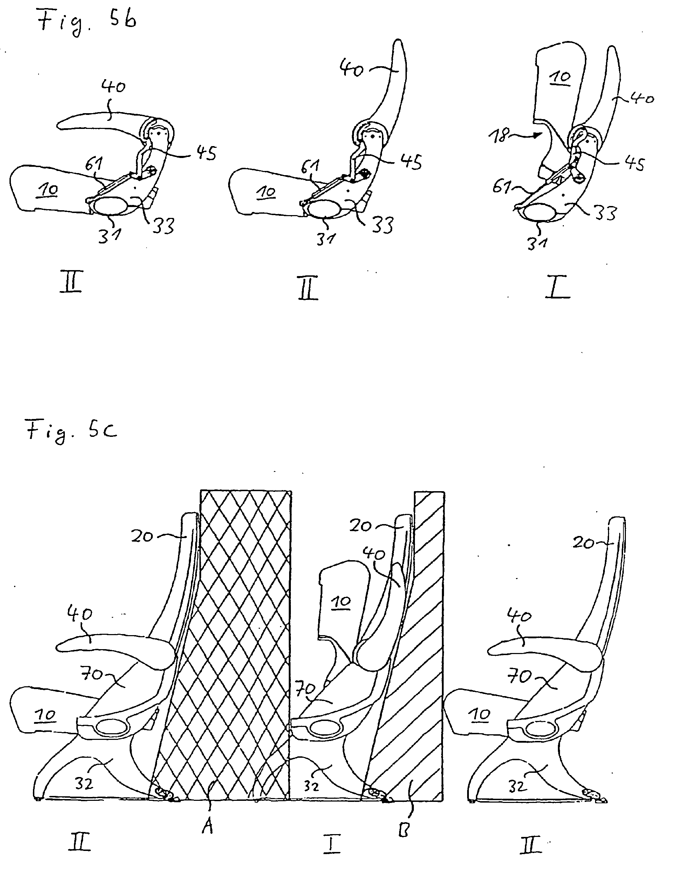

Die verschiedenen Stellungen, die das Sitzteil 10 und die Armlehne 40 einnehmen können, sind besonders deutlich in den Fig. 5a bis 5c zu erkennen. Vor allem Fig. 5b macht deutlich, daß die Armlehne 40 unabhängig von dem Sitzteil 10 hochgeklappt werden kann. In Fig. 5c ist der sich durch das Hochklappen von Sitzteil 10 und Armlehne 40 ergebende Raumgewinn zwischen hintereinander angeordneten Sitzbänken dargestellt. So ist der Freiraum B zwischen zwei hintereinander angeordneten Sitzbänken bei heruntergeklapptem Sitzteil 10 und Armlehne 40 signifikant geringer als der Freiraum A bei hochgeklapptem Sitzteil 10 und Armlehne 40. Der Freiraum A gewährleistet somit eine gute Zugänglichkeit, die sowohl eine einfache Reinigung als auch ein bequemes Hinsetzen sicherstellt. Zu diesem Zweck hat es sich in der Praxis als ausreichend erwiesen, lediglich den dem Gang zugewandten Sitz mit einer Gasfeder 61 zu versehen, die ein selbsttätiges Hochklappen des Sitzteiles 10 in die vertikale Stellung I hervorruft. Für die beiden übrigen Sitze ist es ausreichend, wenn das Sitzteil 10 etwa zu Reinigungszwecken manuell von der horizontalen Stellung 11 in die vertikale Stellung I geklappt wird. Indem jedoch der gangseitige Sitz selbsttätig in die vertikale Stellung I schwenkt, ergibt sich zudem die Möglichkeit, den auf diese Weise freiliegenden Tragbalken 31 als Tritt zu benutzen, um beispielsweise Gepäck in den in einem Flugzeug üblicherweise über den Sitzen befindlichen Ablagefächern zu verstauen, wie besonders aus Fig. 5a ersichtlich ist.

Fig. 5a läßt zudem erkennen, daß im Bereich des gangseitigen Sitzes keine die Zugänglichkeit beeinträchtigende Konsole 35 für die Gasfeder 60 angeordnet ist. Die eine Verstellung der Rückenlehne 20 des gangseitigen Sitzes bewirkende Gasfeder 60 ist auf einer Konsole 35 angeordnet, die sich im Bereich des mittleren Sitzes 20 befindet, wie die Fig. 1b und 2a erkennen lassen. Die Konsolen 35 einschließlich der auf diesen befindlichen Gasfedern 60 kommen bei in die horizontale Stellung II geklapptem Sitzteil 10 in Aussparungen 19 zu liegen, die an der Unterseite des Sitzkastens 11 vorgesehen sind, wie aus den Fig. 3b und 5a ersichtlich ist. Der Schwenkbereich des Sitzteiles 10 wird somit durch die Konsolen 35 nicht beeinträchtigt. An der Unterseite des Sitzkastens 11 ist ferner eine Aussparung 18 vorhanden, die an die Kontur des Tragbalkens 31 angepaßt ist. In der Aussparung 18 liegt der Sitzkasten 11 in der horizontalen Stellung II des Sitzteiles 10 auf dem Tragbalken 31 auf, wie beispielsweise aus Fig. 5b zu entnehmen ist. Die über eine im wesentlichen muldenförmige Kontur verfügende Aussparung 18 dient zum einen als Anschlag für den Sitzkasten 11, wodurch das Sitzteil 10 in der horizontalen Stellung 11 lagegenau positioniert wird. Eine Positionierung des Anschlages kann, wie in Fig. 3b gezeigt, seitlich des Sitzteiles vorgesehen sein oder in einer nicht gezeigten Variante auch unterhalb des Sitzteiles 10. Zum anderen wird das Sitzteil 10 in der Aussparung 18 auf dem Tragbalken 31 abgestützt, so daß die Tragbolzen 50 in der üblicherweise belasteten, horizontalen Stellung 11 des Sitzteiles 10 entlastet werden. Die Tragbolzen 50 können somit geringer dimensioniert werden oder ohne weiteres zusätzlich belastet werden, beispielsweise durch auf der Rückseite der Rückenlehnen 20 befindliche Klapptische, die schwenkbar an den Tragbolzen 50 angelenkt sind.

Der zuvor beschriebene Fluggastsitz zeichnet sich durch eine vergleichsweise einfache und leichtgewichtige Konstruktion aus. Grund hierfür ist zum einen die Verwendung von Materialien, wie beispielsweise Aluminium oder CfK, die bei vergleichsweise geringer Dichte über eine hohe Festigkeit verfügen. Zum anderen ermöglicht die Zuordnung mehrerer Funktionen zu den einzelnen Bauteilen, wie beispielsweise die gleichzeitige Lagerung des Sitzteiles 10 und der Rückenlehnen 20 durch die Tragbolzen 50, eine geringe Anzahl an Bauteilen, die sowohl eine schnelle Montage als auch eine kompakte und modulare Bauweise gewährleisten. Weiterhin ist der oben beschriebene Fluggastsitz durch die Ausbildung als relativ gut zugängliche Sitzbank gekennzeichnet. Ursache hierfür ist in erster Linie die schwenkbare Anordnung des Sitzteiles 10. Der auf diese Weise als Klappsitz ausgebildete Fluggastsitz bietet im hochgeklappten Zustand des Sitzteiles 10 einen relativ großen Freiraum A zwischen zwei hintereinander angeordneten Sitzbänken. Das selbsttätige Hochklappen des gangseitigen Sitzes der Sitzbank im unbesetzten Zustand stellt ein bequemes Durchkommen durch den Gang des Flugzeuges sicher. Nicht zuletzt trägt der oben beschriebene Fluggastsitz einer unfallverhütenden Ausgestaltung Rechnung, indem potentielle Gefährdungen eines Passagiers, beispielsweise durch Quetschungen, durch das Vorsehen der Abdeckung 43 oder einer in den Fig. 5a und 5c zu erkennenden Verkleidung 70 der Sitzteiler 33 begegnet wird.

### Bezugszeichenliste

- 10: Sitzteil
- 11: Sitzkasten
- 12: obere Fläche
- 13: Vertiefung
- 14: Polster
- 15: Tragarm
- 16a: Öffnung
- 16b: Öffnung
- 17: Staufach
- 18: Aussparung
- 19: Aussparung

- 20: Rückenlehne
- 21: Lagerschelle
- 22: Abflachung

- 30: Sitzgestell
- 31: Tragbalken
- 32: Gestellfuß
- 33: Sitzteiler
- 34: Lagerbuchse
- 35: Konsole

- 40: Armlehne
- 41: Unterschale
- 42: Oberschale
- 43: Abdeckung
- 44: Kulisse
- 45: Koppelstange
- 46: Führungsbolzen
- 47: Gelenkbolzen
- 48: Schwenkhebel
- 49: Schraube

- 50: Tragbolzen
- 51: erster Endabschnitt
- 52a: zweiter Endabschnitt
- 52b: zweiter Endabschnitt
- 53a: Mittelabschnitt
- 53b: Mittelabschnitt
- 54: Abflachung
- 55: Verstellhebel
- 56: Abflachung
- 57: Abflachung

- 60: Gasfeder
- 61: Gasfeder
- 62: Verbindungsstück

- 70: Verkleidung

- A: Freiraum
- B: Freiraum
- I: vertikale Stellung
- II: horizontale Stellung

## Patentansprüche

1. Fahrzeugsitz, insbesondere Fluggastsitz, mit einem Sitzteil (10) und einer Rückenlehne (20), die an einem Sitzgestell (30) angeordnet sind, wobei das Sitzteil (10) um eine horizontale Achse von einer ersten, annähernd vertikalen Stellung (I) in eine zweite, annähernd horizontale Stellung (II) klappbar ist, wobei das Sitzgestell (30) mindestens einen freitragenden Tragbalken (31), der auf Gestellfüßen (32) abgestützt ist, und wenigstens zwei die Rückenlehne (20) einfassende Sitzteiler (33), die an dem Tragbalken (31) befestigt sind, aufweist und wobei das Sitzteil (10) mit Tragarmen (15) versehen ist, die zum Klappen des Sitzteils (10) schwenkbar an den Sitzteilern (33) angelenkt sind, wobei ein Tragbolzen (50), der an einem ersten Endabschnitt (51) in einer an den Sitzteilern (33) angeordneten Lagerbuchse (34) drehbar gelagert und an einem zweiten Endabschnitt (52a, 52b) entweder drehbar oder drehfest in einer an der Rückenlehne (20) angeordneten Lagerschelle (21) gelagert ist, wobei der Tragbolzen (50) ein zwischen dem ersten Endabschnitt (51) und dem zweiten Endabschnitt (52a, 52b) befindlichen Mittelabschnitt (53a, 53b) aufweist, der drehfest in einer Öffnung (16a, 16b) der Tragarme (15) angeordnet ist und eine Feder (61) über eine Wirkverbindung am Sitzteil (10) angreift und mittels der Federkraft das Sitzteil (10) hochgeschwenkt positioniert ist (Stellung I) sowie entgegen der Federkraft in eine horizontale zweite Stellung (II) schwenkbar ist und die Feder (61) am Sitzgestell (30) angeordnet und mit einem Schwenkhebel (48), der drehfest mit dem ersten Endabschnitt (51) des Tragbolzens (50) gekoppelt ist, verbunden ist.

2. Fahrzeugsitz nach Anspruch 1, **dadurch gekennzeichnet, daß** die Rückenlehne (20) gegen die Wirkung einer Feder, vorzugsweise einer Gasfeder (60), verstellbar an den Sitzteilern (33) angeordnet ist.

3. Fahrzeugsitz nach Anspruch 2, **dadurch gekennzeichnet, daß** die Feder (60) auf einer Konsole (35), die an dem Tragbalken (31) befestigt ist, angeordnet und mit einem Verstellhebel (55), der drehfest mit dem ersten Endabschnitt (51) des Tragbolzens (50) gekoppelt ist, verbunden ist.

4. Fahrzeugsitz nach einem der Ansprüche 1 bis 3, **gekennzeichnet durch** eine Armlehne (40), die an den Sitzteilern (33) schwenkbar angeordnet ist.

5. Fahrzeugsitz nach Anspruch 4, **dadurch gekennzeichnet, daß** die Armlehne (40) aus einer Unterschale (41) und einer Oberschale (42), die das obere Ende der Sitzteiler (33) umgreifen, zusammengesetzt ist.

6. Fahrzeugsitz nach einem der Ansprüche 1 bis 5, **dadurch gekennzeichnet, daß** die Feder (61) als Gasfeder (61) ausgebildet ist.

7. Fahrzeugsitz nach einem der Ansprüche 1 bis 6, **dadurch gekennzeichnet, daß** eine Koppelstange (45), die mittels eines Führungsbolzens (46) in einer an der Armlehne (40) angeordneten Kulisse (44) geführt ist, an dem Schwenkhebel (48) angelenkt ist.

8. Fahrzeugsitz nach einem der Ansprüche 1 bis 7, **dadurch gekennzeichnet, daß** der Tragbalken (31) im Querschnitt rund, vorzugsweise oval, ausgebildet ist.

9. Fahrzeugsitz nach einem der Ansprüche 1 bis 8, **dadurch gekennzeichnet, daß** der Tragbalken (31) aus einem kohlefaserverstärkten Kunststoff gefertigt ist.

10. Fahrzeugsitz nach einem der Ansprüche 1 bis 9, **dadurch gekennzeichnet, daß** die Gestellfüße (32) und/oder die Sitzteiler (33) und/oder die Konsolen (35) aus Aluminium gefertigt, insbesondere gefräst, und vorzugsweise durch eine Klemmverbindung an dem Tragbalken (31) befestigt sind.

11. Fahrzeugsitz nach einem der Ansprüche 1 bis 10, **dadurch gekennzeichnet, daß** das Sitzteil (10) einen Sitzkasten (11) aufweist, der vorzugsweise aus einem kohlefaserverstärkten Kunststoff gefertigt und mit einem Polster (14) aus einem elastischen Werkstoff versehen ist.

12. Fahrzeugsitz nach Anspruch 11, **dadurch gekennzeichnet, daß** der Sitzkasten (11) eine obere Fläche (12) aufweist, die mit einer rampenförmigen Vertiefung (13) versehen ist.

13. Fahrzeugsitz nach Anspruch 11 oder 12, **dadurch gekennzeichnet, daß** der Sitzkasten (11) mit einem Staufach (17) versehen ist.

14. Fahrzeugsitz nach einem der Ansprüche 11 bis 13, **dadurch gekennzeichnet, daß** der Sitzkasten (11) eine Aussparung (18) aufweist, die an die Kontur des Tragbalkens (31) angepaßt ist und in welcher der Sitzkasten (11) in der zweiten Stellung (II) des Sitzteils (10) auf dem Tragbalken (31) aufliegt.

15. Fahrzeugsitz nach einem der Ansprüche 11 bis 14, **dadurch gekennzeichnet, daß** der Sitzkasten (11) eine Aussparung (19) für die Konsolen (35) aufweist.

16. Fahrzeugsitz nach einem der Ansprüche 1 bis 15, **gekennzeichnet durch** jeweils mehrere, vorzugsweise drei, Sitzteile (10) und Rückenlehnen (20), die nebeneinander auf dem Tragbalken (31) angeordnet sind.

## Claims

1. A vehicle seat, particularly an aircraft passenger seat, with a seat portion (10) and a back rest (20), which are arranged on a seat frame (30), and in which the seat portion (10) can be folded about a horizontal axis from a first approximately vertical position (I) to a second approximately horizontal position (II), and in which the seat frame (30) has at least one cantilevered support beam (31) which is supported on frame legs (32) and at least two seat dividers (33) with the back rest (20) between them which are attached to the support beam (31), and in which the seat portion (10) is provided with support arms (15) which, for folding the seat portion (10), are articulated swivellably on the seat dividers (33), and in which a carrier pin (50) which at a first end section (51) is carried rotatably in a bearing bush (34) arranged on the seat dividers (33) and at a second end section (52a, 52b) is carried either rotatably or non-rotatably in a bearing bracket (21) arranged on the back rest (20), and in which the carrier pin (50) has a centre section (53a, 53b), situated between the first end section (51) and the second end section (52a, 52b), which is arranged non-rotatably in an aperture (16a, 16b) in the support arms (15) and via a connecting linkage engages a spring (61) on the seat portion (10) and by the force of the spring the seat portion (10) is placed in a folded up position (position I) and also can be folded against the force of the spring into a horizontal second position (II) and the spring (61) is arranged on the seat frame (30) and connected to a swivelling lever (48) which is connected non-rotatably to the first end section (51) of the carrier pin (50).

2. A vehicle seat according to claim 1, **characterised in that** the back rest (20) is arranged on the seat dividers (33) so as to be adjustable against the action of a spring, preferably a gas spring (60).

3. A vehicle seat according to claim 2, **characterised in that** the spring (60) is arranged on a bracket (35) which is attached to the support beam (31), and is connected to an adjustment lever (55) which is fixed non-rotatably to the first end section (51) of the carrier pin (50).

4. A vehicle seat according to any one of claims 1 to 3, **characterised by** an armrest (40) which is arranged swivellably on the seat dividers (33).

5. A vehicle seat according to claim 4, **characterised in that** the armrest (40) is composed of a lower shell (41) and an upper shell (42) which fit around the upper end of the seat dividers (33).

6. A vehicle seat according to any one of claims 1 to 5, **characterised in that** the spring (61) is in the form of a gas spring (61).

7. A vehicle seat according to any one of claims 1 to 6, **characterised in that** a connecting rod (45) which is guided by means of a guide pin (46) in a slide (44) arranged on the armrest (40) is pivoted on the swivelling lever (48).

8. A vehicle seat according to any one of claims 1 to 7, **characterised in that** the support beam (31) is made with a rounded, preferably oval cross-section.

9. A vehicle seat according to any one of claims 1 to 8, **characterised in that** the support beam (31) is manufactured from carbon fibre reinforced plastics.

10. A vehicle seat according to any one of claims 1 to 9, **characterised in that** the frame legs (32) and/or the seat dividers (33) and/or the brackets (35) are manufactured, particularly milled, from aluminium, and are attached, preferably by clamping, to the support beam (31).

11. A vehicle seat according to any one of claims 1 to 10, **characterised in that** the seat portion (10) has a seat casing (11) which is preferably manufactured from carbon fibre reinforced plastics and is provided with a cushion (14) of an elastic material.

12. A vehicle seat according to claim 11, **characterised in that** the seat casing (11) has an upper surface (12) which is provided with a ramp-shaped hollow (13).

13. A vehicle seat according to claim 11 or 12, **characterised in that** the seat casing (11) is provided with a stowage compartment (17).

14. A vehicle seat according to any one of claims 11 to 13, **characterised in that** the seat casing (11) has a recess (18) which is matched to the shape of the support beam (31) and in which the seat casing (11) rests on the support beam (31) in the second position (II) of the seat portion (10).

15. A vehicle seat according to any one of claims 11 to 14, **characterised in that** the seat casing (11) has a recess (19) for the brackets (35).

16. A vehicle seat according to any one of claims 1 to 15, **characterised in that** each has a plurality, preferably three, of seat portions (10) and back rests (20), which are arranged next to each other on the support beam (31).

## Revendications

1. Siège pour véhicule, en particulier siège pour passager d'avion, comprenant une partie d'assise (10) et un dossier (20) monté sur un châssis de siège (30), et dans lequel :
- la partie d'assise (10) peut passer par basculement autour d'un axe horizontal d'une première position (I) à peu près verticale à une seconde position (II) à peu près horizontale,
- le châssis de siège (30) présente au moins une poutre porteuse (31) avec porte-à-faux qui s'appuie sur des pieds de châssis (32) et au moins deux séparateurs de siège (33) qui sont fixés sur la poutre porteuse (31) et qui encadrent le dossier (20),
- la partie d'assise (10) est équipée de bras porteurs (15) qui, pour le rabattement de la partie d'assise (10), peuvent basculer sur le séparateur de siège (13),
- un pivot porteur (50) est monté par une première partie d'extrémité (51) en rotation dans une douille de palier (34) montée sur le séparateur de siège (33) tandis que par une seconde partie d'extrémité (52a, 52b) il est monté soit en rotation soit sans tourner dans une coque de palier (21) montée sur le dossier (20),
- le pivot porteur (50) présente, entre la première partie d'extrémité (51) et la seconde partie d'extrémité (52a, 52b), une partie médiane (53a, 53b) qui est montée avec solidarité en rotation dans une ouverture (16a, 16b) du bras porteur (15) et est en prise avec un ressort (61) par l'intermédiaire d'une liaison active située sur la partie d'assise (10),
- la partie d'assise (10) est mise en position relevée (position I) par l'action du ressort et peut être basculée contre la force du ressort pour prendre une seconde position (position II) horizontale, le ressort (61) étant monté sur le châssis de siège (30) et relié à un levier de basculement (48) qui est couplé avec solidarité en rotation à la première partie d'extrémité (51) du pivot porteur (50).

2. Siège de véhicule selon la revendication 1, **caractérisé en ce que** le dossier (20) peut se déplacer sur les séparateurs de siège (33) contre l'action d'un ressort, de préférence un ressort à gaz (60).

3. Siège de véhicule selon la revendication 2, **caractérisé en ce que** le ressort (60) est monté sur une console (35) fixée à la poutre porteuse (31) et il est relié à un levier de déplacement (55) couplé avec solidarité en rotation à la première partie d'extrémité (51) du pivot porteur (50)

4. Siège de véhicule selon une des revendications 1 à 3, **caractérisé en ce qu'**il comprend un accoudoir (40) qui peut basculer sur le séparateur de siège (33).

5. Siège de véhicule selon la revendication 4, **caractérisé en ce que** l'accoudoir (40) est composé d'une coque inférieure (41) et d'une coque supérieure (42) qui entourent l'extrémité supérieure du séparateur de siège (33).

6. Siège de véhicule selon une des revendications 1 à 5, **caractérisé en ce que** le ressort (61) est un ressort à gaz.

7. Siège de véhicule selon une des revendications 1 à 6, **caractérisé en ce qu'**au levier basculant (48) est articulée une tige d'accouplement (45) qui est guidée par un pivot de guidage (46) dans une coulisse (44) montée sur l'accoudoir (40).

8. Siège de véhicule selon une des revendications 1 à 7, **caractérisé en ce que** la poutre porteuse (31) présente une section ronde, de préférence ovale.

9. Siège de véhicule selon une des revendications 1 à 8, **caractérisé en ce que** la poutre porteuse (31) est fabriquée en matière plastique renforcée par des fibres de carbone.

10. Siège de véhicule selon une des revendications 1 à 9, **caractérisé en ce que** les pieds de châssis (32) et/ou les séparateurs de siège (33) et/ou les consoles (35) sont fabriqués en aluminium, notamment par fraisage, et ils sont fixés de préférence à la poutre porteuse (31) par une liaison par serrage.

11. Siège de véhicule selon une des revendications 1 à 10, **caractérisé en ce que** la partie d'assise (10) présente une caisson d'assise (11) fabriqué de préférence en matière plastique renforcée par des fibres de carbone et qui est équipé d'un coussin (14) en matériau élastique.

12. Siège de véhicule selon la revendication 11, **caractérisé en ce que** le caisson d'assise (11) présente une face supérieure (12) creusée d'une cavité (13) en forme de pente.

13. Siège de véhicule selon la revendication 11 ou 12, **caractérisé en ce que** le caisson d'assise (11) est équipé d'un compartiment de stockage (17).

14. Siège de véhicule selon une des revendications 11 à 13, **caractérisé en ce que** le caisson d'assise (11) présente un évidement (18) adapté au contour de la poutre porteuse (31) et par lequel le caisson d'assise (11), dans la seconde position (II) de la partie d'assise (10), repose sur la poutre porteuse (31).

15. Siège de véhicule selon une des revendications 11 à 14, **caractérisé en ce que** le caisson d'assise (11) présente un évidement (19) pour les consoles (35).

16. Siège de véhicule selon une des revendications 1 à 15, **caractérisé en ce qu'**il comporte chaque fois plusieurs, de préférence trois parties d'assise (10) et dossiers (20) montés côte à côte sur la poutre porteuse (31).
